# EUROPEAN PATENT APPLICATION

(11) **EP 3 181 936 A1**
(43) Date of publication of application: **21.06.2017**
(21) Application number: 15425111.0
(22) Date of filing: 18.12.2015
(51) Int. Cl.: F16D 65/10, F16D 65/827

(54) **DRUM OF A DRUM BRAKE**

(71) Applicant: Freni Brembo S.p.A., 24035 Curno (Bergamo) (IT); Ford-Werke GmbH, 50735 Köln (DE)
(72) Inventor: Carminati, Fabiano, I-240358 Curno, Bergamo (IT); Oberti, Leone, I-240358 Curno, Bergamo (IT); Ronchi, Nino, I-240358 Curno, Bergamo (IT); Valsecchi, Giacomo, I-240358 Curno, Bergamo (IT); Grabiec, Tomasz, D-51427 Bergisch Gladbach (DE); Rettig, Marc, D-50823 Koeln (DE); Kaupper, Christian, D-50769 Koeln (DE)
(74) Representative: Pulieri, Gianluca Antonio

(57) **Abstract**

A drum (1) of a drum brake has a plurality of fins (30) protruding axially from an outer ring (18), arranged in circumferential succession. Each fin (30) has a predetermined height at which it projects from the outer ring (18), such as to remain lower than the imaginary surface (I1) on which the outer surface (16) of the connection portion (2) lies.

## Description

The present invention relates to a drum of a drum brake particularly suited to obtain a pronounced dissipation of the heat generated during braking.

As is known in the art, a drum brake comprises a drum, in the form of a bell, and a set of friction pads, typically two, provided with a friction surface, called "shoes". The drum is fitted integrally to the wheel hub and is thus in rotation when the vehicle is in motion, while the shoes, housed inside the drum, are supported by a support device (called "brake flange") fixed to the vehicle.

The braking action exercised by the driver causes the advancement of the shoes towards the inner surface of the side wall of the drum, until the friction surface of the shoes abuts with it, exercising by friction a resistance action to the rotation of the drum, thereby resulting in vehicle braking.

On account of the friction between the shoes and the drum, an enormous amount of heat is developed, which if not properly dissipated, would result in a drastic reduction of the effectiveness of braking and sometimes the deterioration of the brake drum and braking members.

There are several solutions which aim to improve the dissipation of heat by the drum.

For example, some solutions are disclosed in documents US 1966169, US 2889173, US 3016269, US 3043630, US 3151709, US 3151710, US 3583533, US 4674606, US-A1-2006/0037820 and US-A1-2015/0083532.

However, known solutions have some drawbacks, such as difficulties of construction, dimensions and low cooling efficiency.

The purpose of the present invention is to make a drum of a drum brake which meets the needs of the sector and overcomes the drawbacks mentioned.

Such purpose is achieved by a drum according to claim 1. The dependent claims describe embodiment variants.

The features and advantages of the drum according to the present invention will be evident from the description given below, made by way of a non-limiting example, according to the appended drawings, wherein:
- figures 1 to 4 show embodiments of a drum according to the present invention;

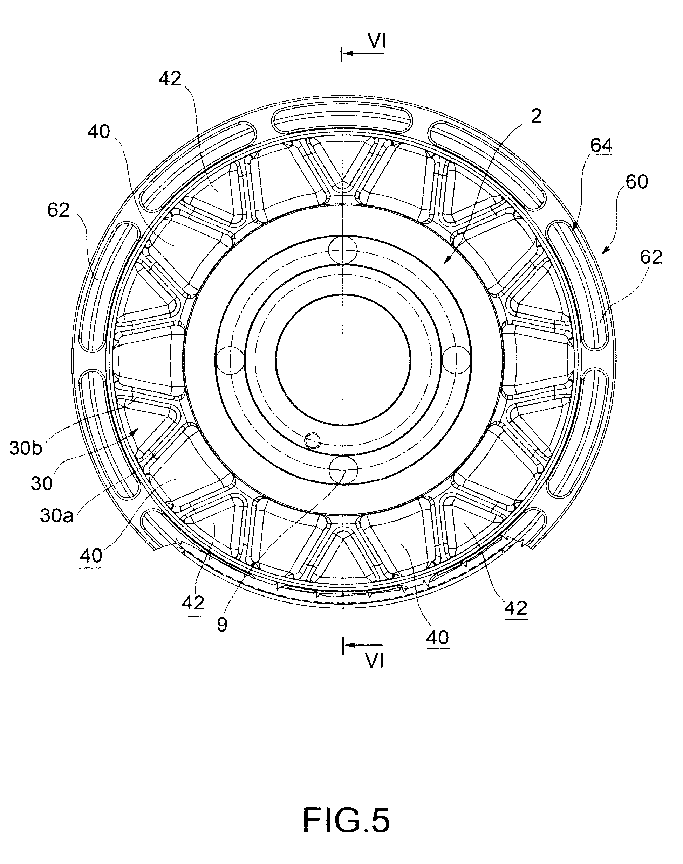

- figure 5 shows a plan view of the drum in figure 3;

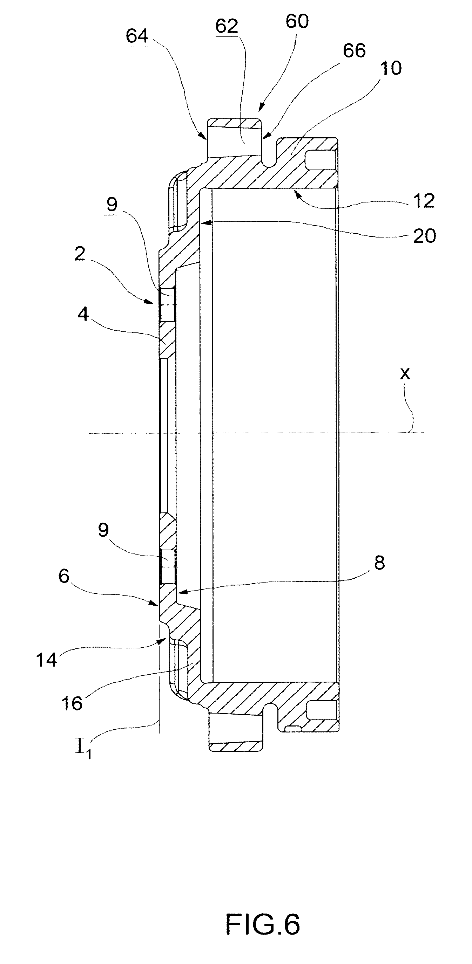

- figure 6 shows a cross-section view of the drum in figure 3 according to the cross-section line VI-VI in figure 5.

According to the invention, a drum braking system for a vehicle comprises a drum 1, suitable to be connected to the hub of a wheel, one or more shoes, each bearing a wear material, a pad support device attached to the vehicle chassis, and a drive device, typically a pedal, to move the shoes and perform the braking.

The drum 1 has an overall axial symmetric shape around a central axis X which, when the drum is mounted on the wheel hub, coincides with the axis of rotation of the hub-drum assembly.

The drum 1 comprises a connection portion 2 designed to be attached to the wheel hub. Said connection portion 2 comprises a connection wall 4, which preferably has a substantially constant axial thickness.

In particular, the connection wall 2 has an outer connection surface 6, designed to come into contact with the wheel hub, and an opposite inner connection surface 8.

The outer connection surface 6 lies on an imaginary plane I1 parallel and axially spaced from the inner connection surface 8; the distance between them determines the thickness of the connection wall 2.

The connection wall 4 presents a plurality of axial through holes 9 designed for the connection to the hub by means of bolts.

The drum 1 further comprises an annular braking wall 10 around the central axis X, having a width identified by a predetermined axial extension.

The braking wall 10 has internally, a cylindrical, circular braking surface 12 concentric to the central axis X, designed to come into contact with the friction material of the shoes to achieve the braking of the vehicle.

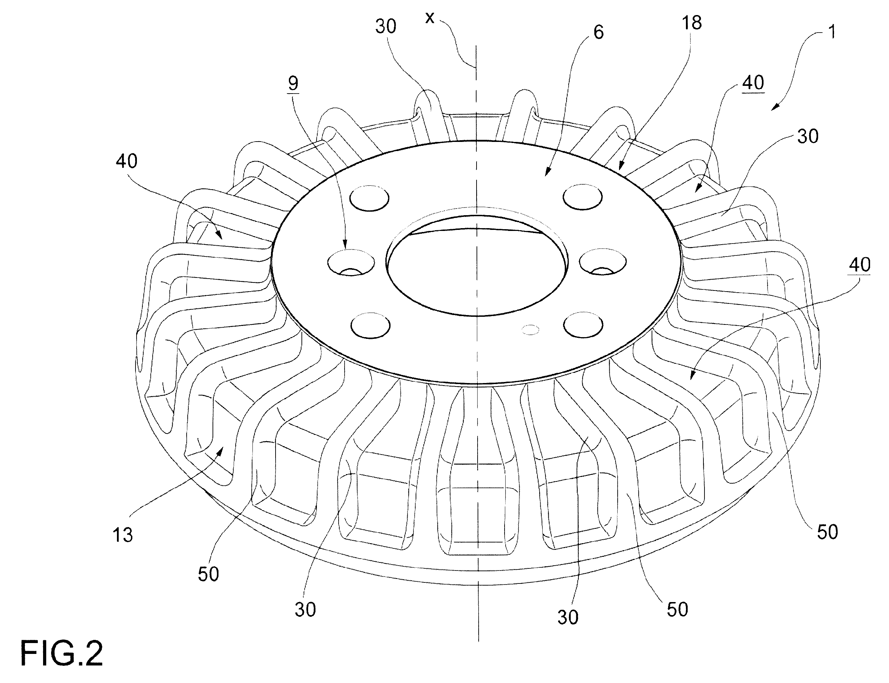

Externally, according to some embodiments, the braking wall 10 has an outer lateral surface 13, typically circular cylindrical (as in figure 2), with a predetermined diameter.

The braking wall has large enough dimensions to radially contain the connection portion 2; in particular, said braking surface 12 has a diameter such as to radially contain the extension of the connection portion 2.

Lastly, the drum 1 comprises an intermediate portion 14 which joins the connection portion 2 to the braking wall 10.

The intermediate portion 14 comprises an intermediate wall 16 having an outer surface defined by an outer ring 18 and an inner surface defined by an inner ring 20.

The outer ring 18 and the inner ring 20 lie on respective imaginary flat surfaces, perpendicular to the central axis X, parallel and spaced apart axially. The outer ring 18 has a larger inner diameter than the maximum size of the outer connection surface 6.

Preferably, in addition, the inner ring 20 joins at its outer diameter 12 directly with the braking surface 12, while, preferably, the outer lateral surface 13 of the braking wall 10 joins the outer ring 18 of the intermediate portion 14.

The drum 1 comprises a plurality of fins 30 protruding axially from the outer ring 18. Preferably, said fins 30 are in circumferential sequence and are angularly equally spaced, forming between one fin 30 and that angularly next to it, a respective ventilation duct 40.

Each fin 30 maintains a predetermined height at which it projects from the outer ring 18, in any case such as to remain lower than the imaginary surface on which the outer connection surface 16 lies. Preferably, this height is constant along the radial direction.

In addition, each fin 30 has a predefined width circumferentially. Preferably, said width is constant along the radial direction.

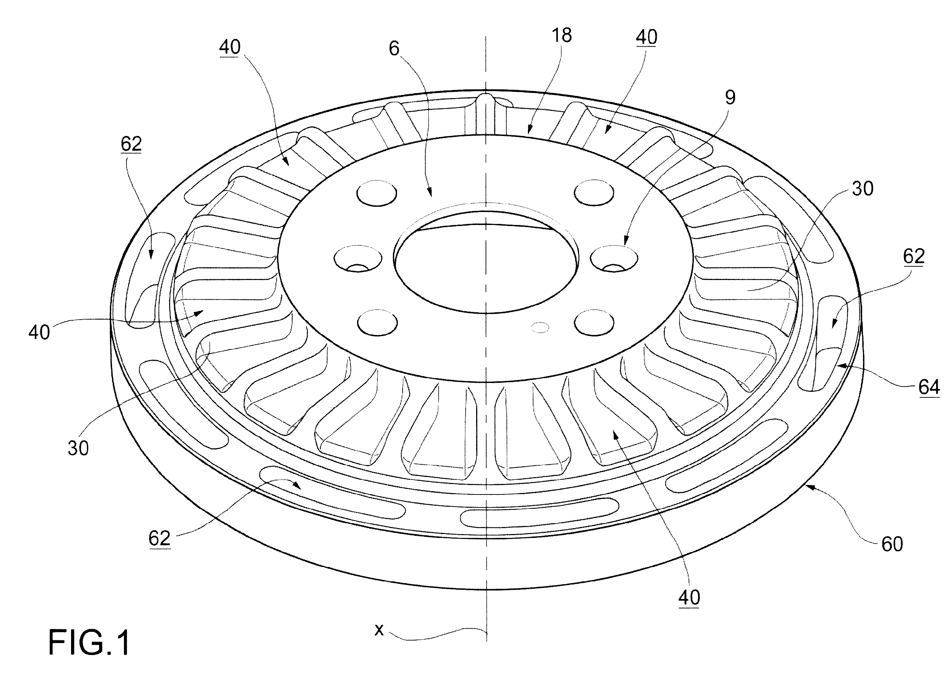

In addition, preferably, each fin 30 extends radially between the outer connection surface 16 and the braking wall 10, preferably in a straight manner, along a fin axis coincident with a radial direction (figures 1 and 2).

In such embodiment, the ventilation duct 40 is therefore divergent towards the periphery of the outer ring 18.

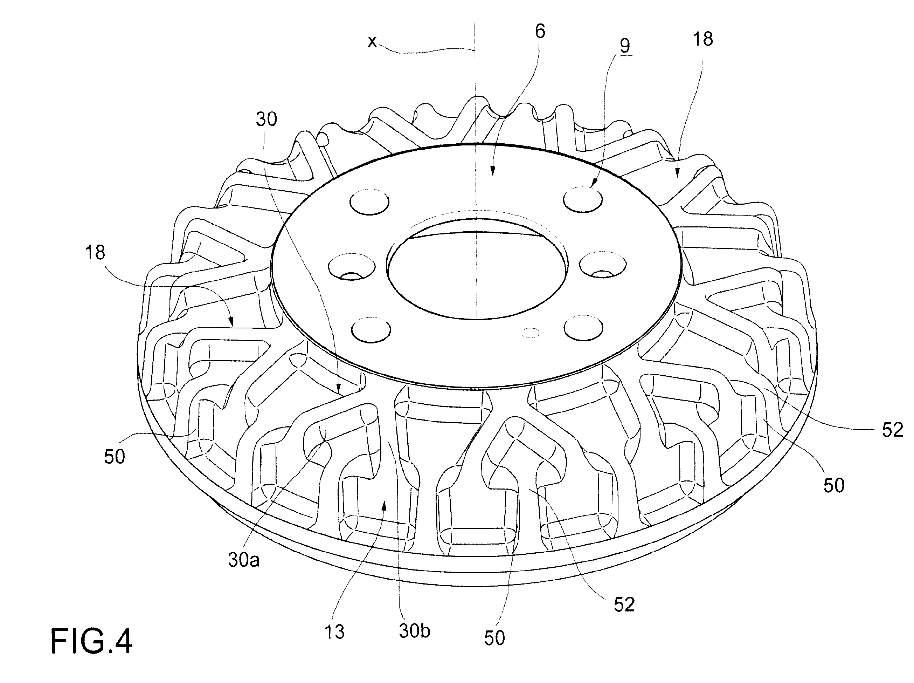

According to further embodiments, moreover, the drum 1 comprises a plurality of prominences 50 projecting radially from the outer lateral surface 13 of the braking wall 10, arranged in circumferential succession, preferably angularly equidistant (figures 2 and 4).

According to one embodiment, each prominence 50 constitutes an extension on the outer lateral surface 13 of a respective fin 30, forming a single continuous element (figure 2).

According to a further embodiment, each prominence 50 ends at the join between the outer lateral surface 13 and the outer ring 18, so as to be separate from the fins 30 placed on the outer ring 18 (figure 4).

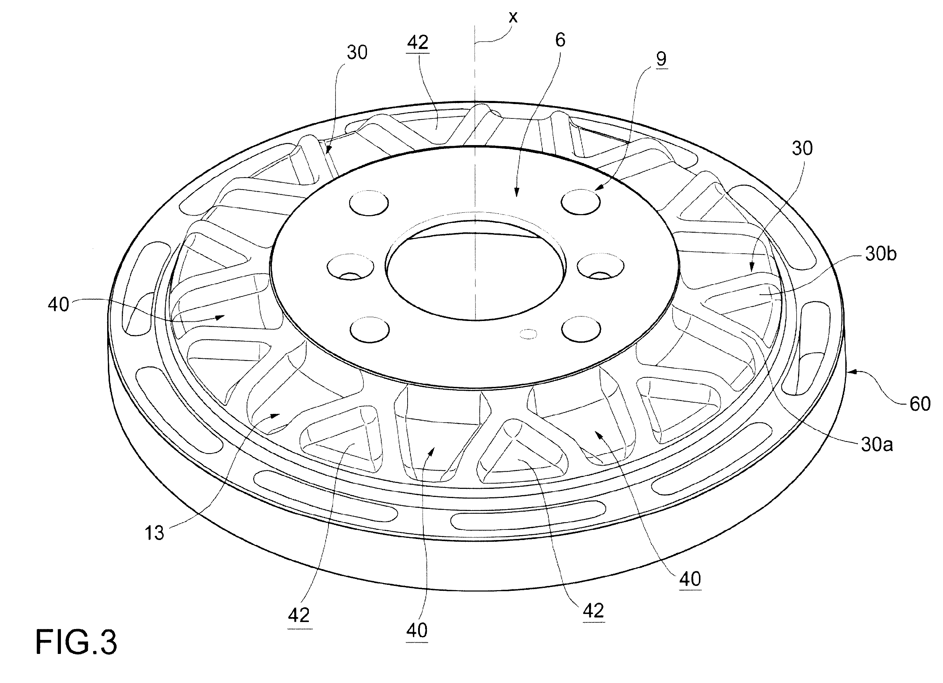

According to a further embodiment, each fin 30 comprises two distinct fin portions 30a, 30b, of which at least one extends along a separate axis from the radial direction (figure 3 and 4).

For example, the two fin portions 30a, 30b are divergent towards the periphery of the outer ring 13. For example, said fin portions 30a, 30b are incident towards the outer connection surface 6 and join into a tip at the join between the connection portion 2 and the intermediate portion 14, arranging themselves in a "V" opening towards the periphery of the outer ring 18.

Consequently, the ventilation ducts 40 formed between one fin and the next converge towards the periphery of the outer ring 18, while between the fin portions 30a, 30b a compartment 42 is made diverging towards the periphery of the outer ring 18.

According to one embodiment, moreover, the prominences 50 end at the outer ring 18 in an end 52 placed between the peripheral ends of the fin portion 30a, 30b, preferably in a middle position (Figure 4).

According to further embodiments, the drum 1 comprises a ventilation band 60 which extends annularly around the braking wall 10, radially external thereto (figures 1 and 3).

Said ventilation band 60, which has a predefined axial thickness, is preferably provided with a plurality of ventilation ducts 62 separated circumferentially and passing through the thickness of said band 60 between an input opening 64 and an output opening 66.

For example, each input opening 64, facing towards the outer ring 18, has a predefined angular extension and preferably a loop shape.

Preferably, each input opening 64 is positioned and sized to match the peripheral breadth of a respective ventilation duct 40.

Preferably, moreover, the cross-section of the ventilation duct 62 narrows from the input opening 64 towards the output opening 66, for example forming a truncated-cone lateral surface of said ventilation duct 62.

Preferably, moreover, the ventilation band 60 has a predefined width in the axial direction; said width is less than the width of the braking wall 10.

Preferably, the drum, finished or semi-finished is made in one piece in cast iron, preferably by sand casting. Possibly, the casting obtained is further processed through machining chip removal.

According to further embodiments, the drum, finished or semi-finished, is made of steel or aluminium.

Innovatively, the drum according to the present invention has excellent heat dissipation characteristics while remaining of reduced mass and dimensions.

It is believed that these characteristics are attributable to the fins protruding from the outer ring, which cause turbulence of the air and facilitate heat exchange.

Advantageously, moreover, the ventilation ducts make it possible to also skim the limit surface of the braking wall with a stream of air further improving heat exchange.

According to a further advantageous aspect, the drum has a simple geometry, so as to permit manufacturing by casting.

It is clear that a person skilled in the art may make modifications to the drum described above so as to satisfy specific requirements, all contained within the scope of protection as defined by the following claims.

## Claims

1. Drum (1) of a drum brake, having a central axis (X) and comprising:
- a connection portion (2) intended to be connected to a wheel hub, comprising a connection wall (4) having an outer connection surface (6) lying on an imaginary plane (I1) perpendicular to the central axis (X);
- an annular braking wall (10) having internally, a cylindrical, circular braking surface (12) concentric to the central axis (X), intended to come into contact with the friction material of shoes of the drum brake;
- an intermediate portion (14) which joins the connection portion (2) to the braking wall (10) and comprises an intermediate wall (16) having an outer surface defined by an outer ring (18);
- a plurality of fins (30) protruding axially from the outer ring (18), arranged in circumferential succession, wherein each fin (30) has a predetermined height at which it projects from the outer ring (18), in any case such as to remain lower than the imaginary surface (I1) on which the outer connection surface (16) lies.

2. Drum according to claim 1, wherein each fin (30) extends radially between the outer connection surface (16) and the braking wall (10) in a straight manner.

3. Drum according to claim 2, wherein each fin (30) extends along a fin axis coincident with a radial direction.

4. Drum according to claim 1, wherein each fin (30) comprises two distinct fin portions (30a, 30b), of which at least one extends along a separate axis from the radial direction.

5. Drum according to claim 4, wherein the two fin portions (30a, 30b) diverge from each other towards the periphery of the outer ring (18).

6. Drum according to any of the previous claims, comprising a plurality of prominences (50) projecting radially from an outer lateral surface (13) of the braking wall (10).

7. Drum according to claim 6, wherein each prominence (50) constitutes an extension on the outer lateral surface (13) of a respective fin (30), forming a single continuous element.

8. Drum according to claim 6, wherein each prominence (50) ends at the join between the outer lateral surface (13) and the outer ring (18), so as to be separate from the fins (30) placed on the outer ring (18).

9. Drum according to any of the previous claims, comprising a ventilation band (60) which extends annularly around the braking wall (10), radially external thereto.

10. Drum according to claim 9, wherein said ventilation band (60), is provided with a plurality of ventilation ducts (62) passing through the thickness of said band (60).

11. Drum according to claim 10, wherein the cross-section of the ventilation duct (62) narrows from an input opening (64), facing the outer ring (18), towards the output opening (66).

12. Drum according to any of the previous claims, made from a single piece made by casting.

13. Mould in foundry sand for the construction of a drum (1) according to any of the previous claims.

14. Method for making a drum (1) by sand casting according to any of the claims from 1 to 12.
